# EUROPEAN PATENT APPLICATION

(11) **EP 4 693 827 A1**
(43) Date of publication of application: **11.02.2026**
(21) Application number: 24777708.9
(22) Date of filing: 12.03.2024
(51) Int. Cl.: H02K 1/16, H02K 3/12

(54) **STATOR ASSEMBLY, METHOD FOR WINDING WINDING OF STATOR ASSEMBLY, MOTOR, AND VEHICLE**

(30) Priority: 31.03.2023 CN 202310359233
(71) Applicant: BYD Company Limited, Shenzhen, Guangdong 518118 (CN)
(72) Inventor: LU, Hao, Shenzhen, Guangdong 518118 (CN); YOU, Bin, Shenzhen, Guangdong 518118 (CN)
(74) Representative: Mathys & Squire
(86) International application number: PCT/CN2024/081207
(87) International publication number: WO 2024/198918

(57) **Abstract**

A stator assembly, a method for winding a winding of a stator assembly, a motor, and a vehicle. The stator assembly is applicable to a z-slot 2p-stage m-phase motor. The stator assembly comprises a stator iron core and a stator winding. The stator iron core has stator slots spaced apart in a circumferential direction, and each stator slot has a plurality of slot layers arranged in a radial direction. The stator winding comprises a plurality of conductor sections, the conductor sections comprise a first-type conductor section, two in-slot portions of the first-type conductor section are located in adjacent slot layers of stator slots, respectively, and are both located in an intermediate slot layer, and the span of the first-type conductor section is y-1 stator slots.

## Description

### FIELD

The present disclosure relates to the field of vehicle electric machines, and in particular, to a stator assembly, a method for winding a winding of a stator assembly, a motor, and a vehicle.

### BACKGROUND

In the design of electric machine windings, an arrangement in which the electrical distances between the individual coils of the same phase are not equal can effectively improve the uniformity of the magnetic field distribution of the electric machine, and increase the torque and output power of the electric machine. However, such an arrangement can also cause an increase in electromagnetic noise and vibration of the electric machine, and can also increase the harmonic distortion of the electric machine, affecting the stability and reliability of the electric machine. How to design the windings of the electric machine to improve the comprehensive performance of the electric machine is a problem currently faced by the industry.

### SUMMARY

A selection of concepts in a simplified form are introduced in the Summary section, and will be explained in further detail in the Detailed Description section. The Summary section of the present disclosure is not meant to attempt to define key features and essential features of the claimed subject matter, nor is it meant to attempt to determine the scope of protection of the claimed subject matter.

To at least partially address the above issues, a first aspect of the present disclosure provides a stator assembly, which is applicable to a z-slot 2p-stage m-phase motor, and the stator assembly including:
a stator core having z stator slots spaced apart along a circumferential direction of stator core, each stator slot having a plurality of slot layers arranged in a radial direction; and
a stator winding including a plurality of conductor sections, the plurality of conductor sections including:
a first-type conductor section, two in-slot portions of each of the first-type conductor section being located in adjacent slot layers respectively and having a span of y-1 stator slots,
the two in-slot portions of each of the first-type conductor section being in an intermediate slot layer between a radially outermost slot layer and a radially innermost slot layer, y is an integer and y = z/2p.

In an embodiment, the plurality of conductor sections further includes:
a second-type conductor section, the two in-slot portions of the second-type conductor section being in the radially outermost slot layer, a first connecting end of the second-type conductor section being connected to a second connecting end of one of the first-type conductor section, and a second connecting end of the second-type conductor section being connected to a first connecting end of another one of the first-type conductor section.

In an embodiment, the plurality of conductor sections further includes:
a third-type of conductor section, the two in-slot portions of the third-type of conductor section being in the radially innermost slot layer and having a span of y stator slots,
a first connection end of the third-type of conductor section being connected to a second connection end of one of the first-type of conductor section, and a second connection end of the third-type of conductor section being connected to a first connection end of another of the first-type of conductor section.

In an embodiment, each phase stator winding includes a plurality of the first-type of conductor sections, the second-type of conductor sections and the third-type of conductor sections;
the plurality of conductor sections of each phase stator winding are structured within the stator core as:
two adjacent conductor sections being located in different slot layers and differing by y stator slots in the circumferential direction,
the conductor section being arranged starting from the radially outermost slot layer of an initial slot to the radially second innermost slot layer of a final slot, the kM+1th conductor section to the (k+1/2)M+1th conductor section being arranged to span along a first circumferential direction,
the (k+1/2)M+2th conductor section to the (k+1)Mth conductor section being arranged to span along a second circumferential direction opposite to the first circumferential direction,
the (k+1/2)M+2th conductor section and the (k+1/2)M+1th conductor section differing by y stator slots in the second circumferential direction, the (k+1)M+1th conductor section and the (k+1)Mth conductor section differing by y stator slots in the second circumferential direction,
M is the number of the slot layers of the stator slots, k≥0, and k is an integer.

In an embodiment, the second-type of conductor section includes a first sub-conductor section spanning y+1 stator slots and a second sub-conductor section spanning y-2 stator slots.

In an embodiment, two of the first sub-conductor sections are arranged between two adjacent ones of the second sub-conductor sections.

A number of slots per stage per phase is q = z/(2p)/m = 3.

In an embodiment, the number of stator slots is 54, 72 or 90; and/or
the number of slot layers of each stator slot is 6, 8 or 10.

In an embodiment, a cross-sectional shape of the conductor section in a direction perpendicular to an extension direction of the conductor section is rectangular.

In an embodiment, the stator winding includes a three-phase winding, each phase stator winding includes one coil, a lead wire and a neutral point wire of each phase stator winding differing by y stator slots in the circumferential direction.

In an embodiment, the stator winding includes a three-phase winding, respectively an A-phase winding, a B-phase winding and a C-phase winding, a lead wire of the A-phase winding and a lead wire of the B-phase winding differing by z/12 stator slots in the circumferential direction, and wherein the lead wire of the A-phase winding and a lead wire of the C-phase winding differ by z/6 stator slots in the circumferential direction.

In an embodiment, the stator winding includes a three-phase winding, each phase stator winding includes n branches connected in parallel, wherein n is an integer greater than or equal to 2;
the respective lead wires of any two adjacent branches of each phase stator winding differing by z/n stator slots in the circumferential direction;
the lead wire and the neutral point wire of each branch differing by z/n-y stator slots in the circumferential direction.

In an embodiment, each phase stator winding includes four branches connected in parallel, the respective lead wires of two adjacent branches of the four branches differing by z/4 stator slots in the circumferential direction.

In an embodiment, the stator winding includes a three-phase winding, respectively an A-phase winding, a B-phase winding and a C-phase winding, the lead wire of one branch of the A-phase winding and the lead wire of the corresponding branch of the B-phase winding differing by z/12 stator slots in the circumferential direction, and the lead wire of the branch of the A-phase winding and the lead wire of the corresponding branch of the C-phase winding differing by z/6 stator slots in the circumferential direction.

In an embodiment, the stator slots include a first-type stator slot and a second-type stator slot,
the conductor section arranged in the first-type stator slot belonging to the windings of the same phase, and the conductor section arranged in the second-type stator slot belonging to the windings of two different phases, respectively;
the number of conductor section belonging to the windings of the two different phases in the second-type stator slot being unequal.

A second aspect of the present disclosure provides a method for winding a winding of a stator assembly, the stator assembly being applicable to a z-slot 2p-stage m-phase motor, the stator assembly including:
a stator core having z stator slots spaced apart along a circumferential direction of stator core, each stator slot having a plurality of slot layers arranged in a radial direction; and
a stator winding including a plurality of conductor sections, the plurality of conductor sections including:
a first-type conductor section, two in-slot portions of each of the first-type conductor section being located in adjacent slot layers respectively and having a span of y-1 stator slots,
the two in-slot portions of each of the first-type conductor section being in an intermediate slot layer between a radially outermost slot layer and a radially innermost slot layer, y is an integer and y = z/2p;
the method of winding each phase stator winding including: connecting the first-type conductor section as a part of the stator winding.

In an embodiment, the plurality of conductor section of the stator winding further includes:
a second-type conductor section, the two in-slot portions of the second-type conductor section being in the radially outermost slot layer, a first connecting end of the second-type conductor section being connected to a second connecting end of one of the first-type conductor section, and a second connecting end of the second-type conductor section being connected to a first connecting end of another one of the first-type conductor section; and
a third-type of conductor section, the two in-slot portions of the third-type of conductor section being in the radially innermost slot layer and having a span of y stator slots, a first connection end of the third-type of conductor section being connected to a second connection end of one of the first-type of conductor section, and a second connection end of the third-type of conductor section being connected to a first connection end of another of the first-type of conductor section;
the method of winding each phase stator winding including the following steps:
step one: connecting a lead wire to the second-type conductor section in an initial slot, the second-type conductor section in the initial slot arranged to span along a first circumferential direction;
step two: starting from the second-type conductor section in the previous step, from the radially outermost slot layer (113) to the radially innermost slot layer (115), along the first circumferential direction, connecting to the first-type conductor section arranged in the adjacent slot layers (112) by spanning every y stator slots (111), until the first-type conductor section in a radially second innermost slot layer (116) is connected to the third-type conductor section in the radially innermost slot layer (115) after spanning y stator slots (111) along the first circumferential direction, wherein the third-type conductor section is arranged to span along the first circumferential direction;
step three: starting from the third-type conductor section in the previous step, from the radially innermost slot layer to the radially outermost slot layer, along a second circumferential direction opposite to the first circumferential direction, connecting to the first-type conductor section arranged in the adjacent slot layers by spanning every y stator slots, until connecting to the second-type conductor section arranged in the first circumferential direction in the radially outermost slot layer, wherein each first-type conductor section is arranged to span along the second circumferential direction and the second-type conductor section is arranged to span along the first circumferential direction;
step four: starting from a second of the second-type conductor section, switching the direction of a spanning arrangement of the conductor section to the first circumferential direction;
step five: repeating steps S2 to S4 until the first-type conductor section is located in the radially second outermost slot layer of the final slot;
step six: connecting a neutral point wire to the first-type conductor section located in the radially second outermost slot layer of the final slot.

A third aspect of the present disclosure provides a motor, including a rotor and a stator assembly according to the first aspect of the present disclosure, a method for winding a winding of a stator assembly according to the second aspect of the present disclosure.

A fourth aspect of the present disclosure provides a vehicle, including an electric machine according to the third aspect of the present disclosure.

### BRIEF DESCRIPTION OF THE DRAWINGS

The following drawings of embodiments of the present disclosure are hereby included as part of the present disclosure to understand the present disclosure. The drawings illustrate the embodiments of the present disclosure and description to serve to explain the principles of the present disclosure. In the drawings,
FIG. 1 is a schematic diagram of the three-dimensional structure of a stator assembly according to a preferred embodiment of the present disclosure;
FIG. 2 is a schematic diagram of the distributed structure showing the conductor section of the winding of the stator assembly according to a preferred embodiment of the present disclosure, the motor is a 72-slot 8-stage 3-phase motor;
FIG. 3 to 5 are schematic diagrams showing a first configuration of the winding of the A-phase, B-phase and C-phase winding respectively of the embodiment of Figure 2, each phase stator winding includes a single-circuit coil;
FIG. 6 is a schematic diagram showing a second configuration of the insulation paper in the stator slot of the embodiment of Figure 2;
FIG. 7 to 9 are schematic diagrams showing a second configuration of the winding of the A-phase, B-phase and C-phase winding respectively of the embodiment of Figure 2, each phase stator winding comprises two parallel branches; and;
FIG.10 to 12 are schematic diagrams showing a third configuration of the winding of the A-phase, B-phase and C-phase winding respectively of the embodiment of Figure 2, each phase stator winding comprises four parallel branches.

### Description of Reference Numerals:

100: stator assembly
110: stator core
111: stator slot
112: slot layer
113: radially outermost slot layer
114: intermediate slot layer
115: radially innermost slot layer
116: radially second innermost slot layer
117: radially second outermost slot layer
118: first-type stator slot
119: second-type stator slot
120: stator winding
121: bent portion
122: connecting end
123: in-slot portion
124: conductor section
130: lead wire assembly
131: A-phase terminal
132: B-phase terminal
133:C-phase terminal
140: insulation paper
141: partition portion
142: accommodation space
D1: first circumferential direction
D2: second circumferential direction
D3: axial direction

### DETAILED DESCRIPTION

In the following description, numerous specific details are set forth in order to provide a thorough understanding of the present disclosure. It will be apparent, however, to one skilled in the art that the embodiments of the present disclosure can be practiced without these specific details. In other embodiments, technical features that are well known in the art are not described in detail in order to avoid confusion with the embodiments the present disclosure.

In order to thoroughly understand the embodiments of the present disclosure, the detailed structure will be presented in the following description. Obviously, the implementation of the embodiments of the present disclosure is not limited to the specific details familiar to those skilled in the art. The preferred embodiments of the present disclosure are described in detail as follows, however, the present disclosure can have other embodiments in addition to these detailed descriptions, and will not be construed as being limited to the embodiments set forth herein.

It is to be understood that the terminology used herein is for the purpose of describing particular embodiments only and the present disclosure is not intended to be limiting, the singular forms "a," "an," and "the" are intended to include plural forms as well, unless context clearly indicates otherwise. The terms "comprise", "include", when used in this specification, specify presence of stated features, integers, steps, operations, elements, and/or components, but do not preclude presence or addition of one or more other features, integers, steps, operations, elements, components, and/or groups thereof. The terms "upper", "lower", "front", "rear", "left", "right" and similar expressions are used in the present disclosure for the purpose of illustration only and not limitation.

Ordinal numbers such as "first" and "second" referred to in the present disclosure are merely identifiers and do not have any other meaning, for example, specific sequence, etc. Also, for example, the term "first part" does not by itself imply the existence of "second part" and the term "second part" does not by itself imply the existence of "first part".

In the description of the present disclosure, it should be explained that, unless otherwise specified and limited, the terms "mounting", "connected", "connection" will be understood broadly, for example, can be fixedly connected, can be detachably connected, or integrally connected; can be mechanically connected, can be electrically connected; can be directly connected, can be indirectly connected through an intermediate medium, can be internal communication of the two elements. For those skilled in the art, the specific meaning of the above terms in the present disclosure will be understood according to the specific circumstances.

In the following, the embodiments of the present disclosure will be explained in more detail with reference to the drawings, which show a representative embodiment of the present disclosure and is not intended to limit the present disclosure.

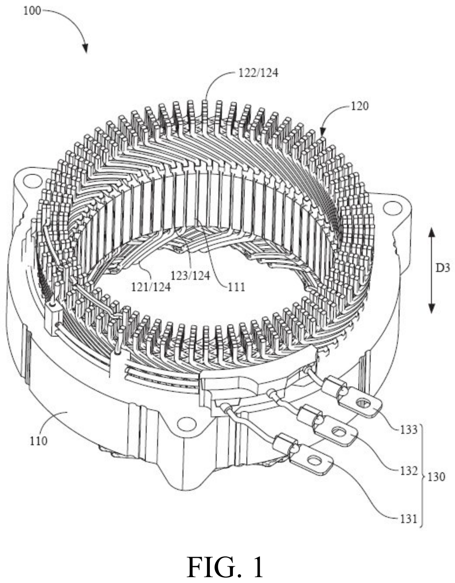

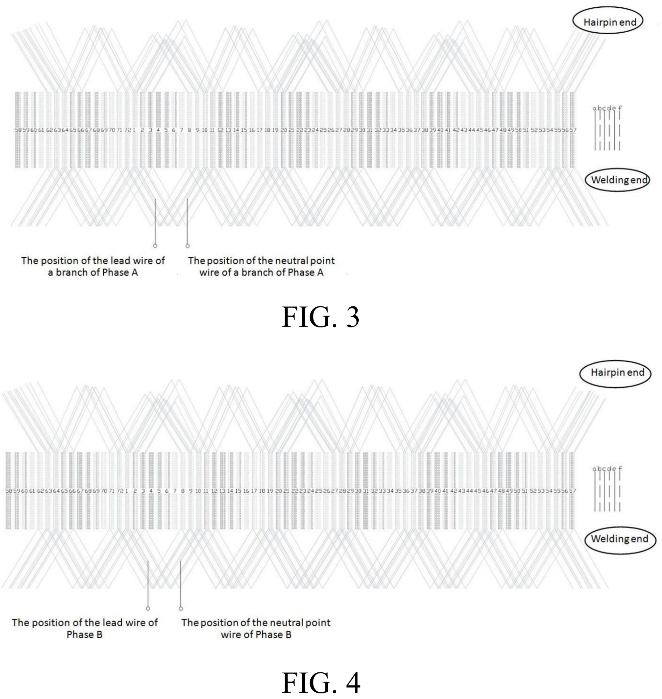

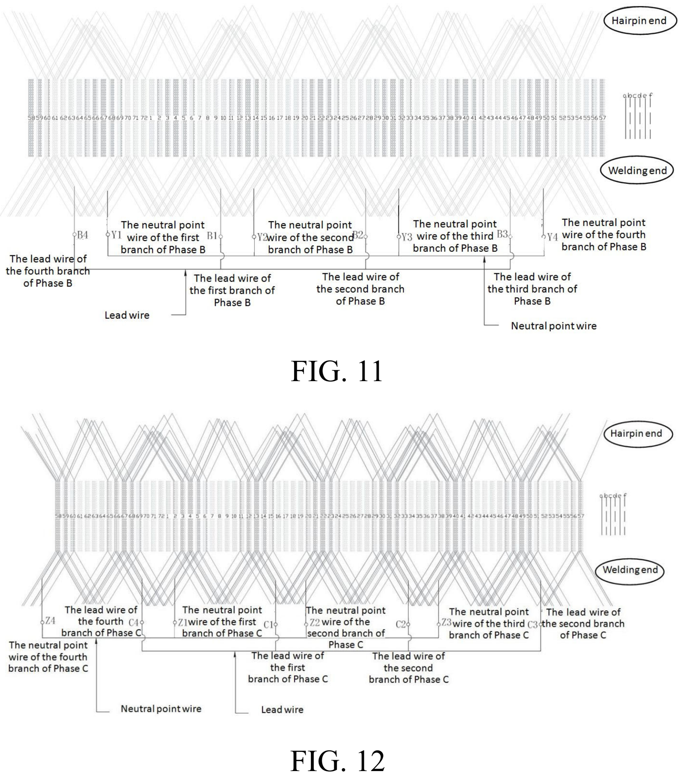

The present disclosure discloses a stator assembly, a method for winding a winding of a stator assembly, a motor, and a vehicle. In order to facilitate understanding of the technical solutions, first refer to the stator assembly 100 according to the embodiment of the present disclosure as described with reference to FIG. 1 to FIG. 12. Wherein, the stator assembly 100 of the embodiment of the present disclosure can be used in a z-slot 2p-stage m-phase motor, the slot number of each stage and each phase is q=z/(2p)/m, m=1, 2, 3···. That is, the stator assembly 100 can be used in a one-phase motor, a two-phase motor, a three-phase motor, etc.

In the following, only the three-phase motor is taken as an example for description, of course, the skilled in the art will understand that the m-phase motor is other phase motor after reading the following technical solutions, therefore it is not repeated here.

As shown in FIG. 1, the stator assembly 100 of the embodiment of the present disclosure comprises a stator core 110 and a stator winding 120.

Specifically, the stator core 110 is cylindrical, and the stator core 110 has a plurality of stator slots 111. The stator slots 111 are formed on the inner circumferential wall of the stator core 110 and penetrate through the stator core 110 along the axial direction D3. A depth direction of the stator slots 111 coincides with a radial direction of the stator core 110. The plurality of stator slots 111 are spaced apart along a circumferential direction of the stator core 110.

Each stator slot 111 has M slot layers 112 arranged in the radial direction, wherein M is greater than or equal to 4. Preferably, M is an even number not less than 4. The "outermost slot layer 113" and "innermost slot layer 115" mentioned below specifically refer to the innermost slot layer 115 and the outermost slot layer 113 of the stator slot 111 from inside to outside along the radial direction of the stator core 110, wherein the innermost slot layer 115 is closer to the central axis of the stator core 110. The slot layers 112 between the outermost slot layer 113 and the innermost slot layer 115 are intermediate slot layers 114.

The stator winding 120 comprises a plurality of conductor sections 124. Specifically, the conductor section 124 is U-shaped, each of which comprises a bent portion 121 and two in-slot portion 123 connected to the bent portion 121 respectively. Among them, the two in-slot portions 123 of each conductor section 124 are located in different stator slots 111 respectively, and the two in-slot portions 123 of each conductor section 124 are beyond the stator core 110 after passing through the corresponding stator slot 111 to form two connecting ends 122.

In an embodiment of the present disclosure, the plurality of conductor sections 124 constituting the stator winding 120 comprises three types, which are a first-type conductor section, a second-type conductor section and a third-type conductor section respectively.

Among them, the first-type conductor section is located in the intermediate slot layer 114 between the radially outermost slot layer 113 and the radially innermost slot layer 115. The first-type conductor section is arranged across adjacent slot layers, and the span is y-1 stator slots 111. The span is specifically the span between the two in-slot portions 123 of the conductor section. In other words, the two in-slot portions 123 of the first-type conductor section are located in two adjacent intermediate slot layers 114 respectively, and the interval is y-1 stator slots 111. Therefore, the number of the intermediate slot layers 114 between the radially outermost slot layer 113 and the radially innermost slot layer 115 is at least 2.

The second-type conductor section is located in the radially outermost slot layer 113. The second-type conductor section is arranged across the same slot layer. In other words, the two in-slot portions 123 of the second-type conductor section are both located in the radially outermost slot layer 113. Specifically, in an embodiment of the present disclosure, the second-type conductor section comprises a first sub-conductor section with a span of y+1 stator slots 111 and a second sub-conductor section with a span of y-2 stator slots 111.

The third-type conductor section is arranged across the same slot layer. The third-type conductor section is specifically arranged in the radially innermost slot layer 115 of the stator slot 111, and the span is y stator slots 111. In other words, the two in-slot portions 123 of the third-type conductor section are both located in the radially innermost slot layer 115.

Among them, y is an integer, and y=z/2p, wherein 2p is the stage number.

In the embodiment, each conductor section 124 has one bend portion 121 and two connecting ends 122. It is assumed that the two connecting ends 122 of each conductor section 124 are a first connecting end and a second connecting end respectively, and the first connecting end is located upstream of the second connecting end along the winding direction of the winding 120. In the embodiment, the first connecting end of a second-type conductor section is connected to the second connecting end of a first-type conductor section, and the second connecting end of the second-type conductor section is connected to the first connecting end of another first-type conductor section. The first connecting end of each third-type conductor section is connected to the second connecting end of a first-type conductor section, and the second connecting end of the third-type conductor section is connected to the first connecting end of another first-type conductor section.

It is understood that the conductor section 124 form the winding by being connected end to end.

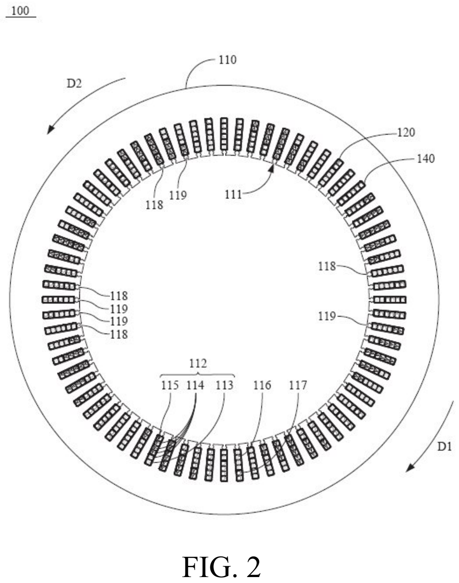

Specifically, in combination with FIGs. 2 to 5, each phase stator winding 120 includes a plurality of first-type conductor section, second-type conductor section and third-type conductor section. The structure in which individual conductor sections 124 are arranged and connected in the stator core 110 is that the second-type conductor section is connected to the third-type conductor section through the first-type conductor section, two adjacent conductor sections 124 are located in different slot layers and differ by y stator slots 111 in the circumferential direction of the stator core 110.

The lead wire of each phase stator winding 120 is connected to one connecting end 122 of a second-type conductor section in the initial slot, and the second-type conductor section is arranged to span along the first circumferential direction D1.

From the initial stator slot 111, the kM+1th conductor section 124 to the (k+1/2)M+1th conductor section 124 are arranged to span along the first circumferential direction D1, wherein k≥0 and k is an integer. In other words, the conductor section 124 is arranged to span along the first circumferential direction D1 from the radially outermost slot layer 113 to the radially innermost slot layer 115. Two adjacent conductor sections 124 are also differing by y stator slots 111 in the first circumferential direction D1 and are located in different slot layers 112. It is understood that when there are two first-type conductor sections, the four in-slot portions 123 of the two first-type conductor sections are located in four different intermediate slot layers 114 respectively.

The (k+1/2)M+2th conductor section 124 to the (k+1)Mth conductor section 124 are arranged to span along a second circumferential direction D2 opposite to the first circumferential direction D1, wherein k≥0 and k is an integer. In other words, during the winding process from the radially innermost slot layer 115 to the radially outermost slot layer 113, the conductor section 124 in the intermediate slot layer 114 is arranged to span along the second circumferential direction D2.

Correspondingly, during the winding process from the radially innermost slot layer 115 to the radially outermost slot layer 113, the two adjacent conductor sections 124 are also differing by y stator slots 111 in the second circumferential direction D2. The (k+1/2)M+2th conductor section 124 and the (k+1/2)M+1th conductor section 124 are differing by y stator slots 111 in the second circumferential direction D2, and the (k+1)M+1th conductor section 124 and the (k+1)Mth conductor section 124 are differing by y stator slots 111 in the second circumferential direction D2.

The first-type conductor section connecting end 122 in the radially second innermost slot layer 116 of the final stator slot 111 is connected to a neutral point wire of the stator winding 120 of the phase.

In the related art, the stator assembly is mostly wound by full-pitch winding, that is, the innermost slot layer, the intermediate slot layer and the outermost slot layer of the stator core are arranged with conductor section with a span of y, wherein y = z/2p, z is the number of stator slots, and 2p is the number of stages of the stator assembly. Thus, the stator assembly can generate current circulation, and there are problems of unbalanced voltage and power imbalance. In addition, each slot layer in the same stator slot of the stator core is arranged with a conductor section of the same phase, the 5th and 7th harmonics in the magnetic field cannot be eliminated, the 6p order torque ripple of the motor cannot be suppressed, and the 6p order vibration noise of the motor is large.

The stator assembly 100 of the present disclosure adopts a short-pitch stator winding. A span of conductor section 124 arranged in the intermediate slot layer 114 of the stator slot 111 is y-1, which is different from the span of the conductor section 124 in the innermost slot layer 115. Thus, the conductor sections 124 in the same stator slot 111 belong to different phase windings, and the 5th and 7th harmonics in the magnetic field can be better eliminated according to the electromagnetic theory. It is measured in experiments that the motor with the stator assembly 100 of the present disclosure can eliminate more than 80% of the 5th and 7th harmonics in the air gap magnetic field, and the 6p order vibration noise is very small.

It will be understood that when the stage number 2p of the motor of the present disclosure is 8, the 24 order torque fluctuation can be suppressed and the 24th order vibration noise can be reduced correspondingly. When the stage number 2p of the motor of the present disclosure is 6, the 18th order torque fluctuation can be suppressed and the 18th order vibration noise can be reduced correspondingly.

The positions of the initial slot and the final slot of each phase stator winding 120 can be determined according to the actual situation. For example, the positions can be determined according to the design parameters of the motor. Preferably, when each phase stator winding includes only single-circuit coil, the initial slot and the final slot can be arranged to be spaced by y stator slots 111 in the circumferential direction. When each phase stator winding includes a plurality of branches, the initial slot and the final slot of each branch can be arranged according to the distribution of each branch.

According to the stator assembly 100 of the present disclosure, the second-type conductor section can be one type with a fixed span value or multiple types with different span values.

In one specific embodiment of the present disclosure, each phase stator winding occupies 3 stator slots 111 each stage. That is, q = z/(2p)/m = 3. The second-type conductor section includes two types with different spans.

Specifically, the second-type conductor section includes a first sub-conductor section with a span of y+1 stator slots 111 and a second sub-conductor section with a span of y-2 stator slots 111. In each phase stator winding, two first sub-conductor sections are arranged between two adjacent second sub-conductor sections. In other words, along the extending direction of each phase stator winding, the arrangement rule of the two types of second-type conductor sections is: first sub-conductor section - first sub-conductor section - second sub-conductor section.

It will be understood that adjacent second-type conductor sections refer to that in the winding direction of each phase stator winding, there is no other second-type conductor section between the two second-type conductor sections.

Through the staggered arrangement, the stator slots 111 of each phase stator winding include two types of a first-type stator slot and a second-type stator slot. The M conductor sections 124 arranged in the first-type stator slot all belong to the stator winding of the same phase, and the conductor section 124 arranged in the M slot layers of the second-type stator slot respectively belong to the stator windings of two different phases. This can achieve a better effect of eliminating 5th and 7th harmonics and reducing 6p order vibration noise.

It is to be understood that the number of slots per stage per phase can also be adjusted according to actual conditions, for example, the number of slots per stage per phase can also be 2, or the number of slots per stage per phase can also be a value greater than 3, for example, 4, 5, 6, etc. Those skilled in the art can adjust according to actual conditions to improve the performance of the motor.

Preferably, the number of stator slots 111 can be 54, 72 or 90. For example, when the number of slots per stage per phase is 3, the stator assembly 100 can be applied to a 6-stage 54-slot 3-phase motor, an 8-stage 72-slot 3-phase motor or a 10-stage 90-slot 3-phase motor.

Preferably, the number of slot layers (the number of slot layers 112) of each stator slot 111 can be 6, 8 or 10. The number of slot layers of the stator slot 111 can be selected according to the design power, the rotation speed, the number of stator coils and the magnetic density of the motor. The higher the number of slot layers of the stator slot 111, the higher the power density and the efficiency of the motor. Controlling the number of slot layers of the stator slot 111 while ensuring the performance of the motor can reduce the manufacturing difficulty and the production cost. Those skilled in the art can determine a reasonable number of slot layers of the stator slot 111 by comprehensively considering the actual requirements of the motor and the manufacturing cost and other factors.

When the number of slot layers of the stator slot 111 increases, the number of intermediate slot layers 114 increases, and a larger number of first-type conductor sections need to be arranged. For example, when the number of slot layers of the stator slot 111 is 8, three first-type conductor sections are arranged between any adjacent second-type conductor section and third-type conductor section. In the present disclosure, the conductor section 124 arranged in the intermediate slot layer 114 only include one type of first-type conductor section with a span of y-1. The design structure is simple, and the electromagnetic capacity and the torque of the motor can be further increased.

It is to be understood that in other embodiments not shown in the present disclosure, the number of slot layers of the stator slot 111 can also be an odd number, for example, the number of slot layers of the stator slot 111 is set to 5, 7, 9, etc. Based on the same design principle, those skilled in the art can make adaptive adjustment to individual conductor section 124 in the stator winding 120 according to the specific number of slot layers, thereby the final arrangement of the stator winding 120 satisfies the short-distance asymmetric arrangement like that shown in FIG. 2.

Referring to Figs. 1 and 2, the conductor section 124 has a rectangular cross-sectional shape in a direction perpendicular to the extension direction of the conductor section 124 (the extension direction of each phase stator winding). It will be understood that designing the cross-section of the conductor section 124 to be non-circular can increase the slot fill factor of the coil in the stator slot 111. By providing the conductor section 124 with a rectangular cross-section, more conductor sections can be arranged in the stator slot 111 of the same volume, thereby making the arrangement of the plurality of conductor sections 124 in the stator slot 111 more compact. It will be understood that the cross-section of the conductor section 124 can also be other shapes, such as trapezoidal, etc.

Referring to Fig. 1, the bent portion 121 of each conductor section 124 is located on one side of the axial direction D3 of the stator core 110, and the connecting end 122 of each conductor section 124 is located on the other side of the axial direction D3 of the stator core 110. In this way, the end-to-end connection between the plurality of conductor sections 124 can be achieved by only performing a connection operation on one side of the axial direction D3 of the stator core 110, thereby improving the production and assembly efficiency of the stator assembly 100 and saving production costs. That is, the winding of each phase stator winding can be achieved by only welding the conductor section 124 to be connected on the side where the connecting ends 122 of the conductor section 124 are located. In industrial production, this can save the production process. In the present disclosure, the side where the bent portion 121 is located is a hairpin end of the stator assembly 100, and the side where the connecting end 122 is located is a welding end of the stator assembly 100.

In the present disclosure, the distance between two adjacent conductor sections 124 in the circumferential direction (the first circumferential direction D1/the second circumferential direction D2) differ by y stator slots 111 and the connecting end 122 of the conductor section 124 is designed to be bent for convenient connection.

Specifically, the second-type conductor section is configured with its connecting end 122 disposed along the first circumferential direction D1 offset from the in-slot portion 123 to which it is connected, and an offset span is y/2 stator slots 111.

The first-type conductor section is configured with its two connecting ends 122 disposed offset from each other in opposite directions, and each connecting end 122 is offset from the in-slot portion 123 to which it is connected by y/2 stator slots 111.

The third-type conductor section is configured with its connecting end 122 disposed along the second circumferential direction D2 offset from the in-slot portion 123 to which it is connected, and an offset span is y/2 stator slots 111.

In other words, the portion of the in-slot portion 123 of each conductor section 124 beyond the stator slot 111 is deflected or bent in the upstream or downstream direction, thereby the connecting end 122 is offset from the corresponding in-slot portion 123, which allows the connecting ends 122 of two conductor sections 124 of adjacent slot layers 112 that need to be connected to be close to each other in the winding direction of the winding 120, therefore facilitating the connection of the two conductor sections 124 of adjacent slot layers 112 that need to be connected without additional connection structures.

Referring to FIG. 1, the connecting ends 122 of adjacent second-type conductor sections span y/2 stator slots 111 in the first circumferential direction D1. Assuming that the in-slot portion 123 of a second-type conductor section is located at the g slot, the connecting end 122 of the corresponding first-type conductor section for connecting the radially second outermost slot layer 117 is actually located at the (g+y/2) slot and is in the radially outermost slot layer 113.

Likewise, the in-slot portion 123 of the first-type conductor section in the radially second outermost slot layer 117 connected to the second-type conductor section is located at the (g+y) slot, and the corresponding connecting end 122 is located at the (g+y/2) slot and is in the radially second outermost slot layer 117. That is, the connecting end 122 of the second-type conductor section and the first-type conductor section are both located in adjacent slot layers 112 in the same radial direction of the stator core 110. The same reasoning can be applied to other adjacent conductor sections 124 to conclude that the connection positions of the conductor sections 124 are also located in adjacent slot layers 112 in the same radial direction.

In the production of the stator assembly 100, after all the conductor sections 124 are arranged in the stator core 110, the conductor sections 124 of each phase stator winding can be connected by welding each adjacent pair of connecting ends 122 in the same radial direction.

In the embodiment, the connecting end 122 of each conductor section 124 is offset by y/2 stator slots 111, thereby, when all the conductor sections 124 are arranged on the stator core 110, the conductor sections 124 do not cross and contact each other except for the lead wire, the neutral point wire and the welding connection part. The conductor section 124 can be pre-bent and then assembled into the stator core 110. Alternatively, the initially unbent conductor section 124 can be assembled into the stator core 110, and then the portion beyond the stator slot 111 is uniformly bent. For example, a mechanical device can be used to bend the same type of conductor section 124 in batches.

Referring to FIGs. 1 to 5, in one embodiment of the present disclosure, the initial slot and the final slot of each phase stator winding differ by y stator slots 111 in the first circumferential direction D1. In this way, the distance between the start point (i.e., the lead wire) and the end point (i.e., the neutral point wire) of the coil corresponding to each phase stator winding is small. Correspondingly, the motor has stronger electromagnetic capability and greater torque, especially at low speed and during startup.

Specifically, when each phase stator winding comprises one coil, the start point (initial slot) and the end point (final slot) of the coil differ by y stator slots. When each phase stator winding comprises a plurality of branches connected in parallel, the start point (initial slot) of the first branch and the end point (final slot) of the last branch differ by y stator slots in the winding direction.

The structure of the stator assembly 100 in one embodiment of the present disclosure is described below with reference to the specific embodiment shown in FIGs. 1 to 5.

The stator winding 120 comprises a three-phase winding. Each phase stator winding comprises one coil for convenience of winding. The three-phase windings are an A-phase winding, a B-phase winding and a C-phase winding, respectively. The stage number 2q is 8. Each phase occupies 3 stator slots 111 each stage. The stator core 110 has 72 stator slots 111 arrayed in the circumferential direction.

Each stator slot 111 has a total of 6 slot layers 112 from the radially innermost slot layer 115 to the radially outermost slot layer 113. The slot layers 112 are numbered a, b, c, d, e and f in the radial direction from the inside to the outside, wherein a slot layer is located at the slot opening of the stator slot 111 and the f slot layer is located at the slot bottom of the stator slot 111.

The stator assembly 100 further comprises a lead wire assembly 130 disposed on the stator core 110, and the lead wire assembly 130 is located on the outer circumferential side of the stator core 110. The lead wire assembly 130 specifically comprises an A-phase terminal 131, a B-phase terminal 132, and a C-phase terminal 133 (referring to FIG. 1). The A-phase terminal 131 is connected to the lead wire of the A-phase winding, the B-phase terminal 132 is connected to the lead wire of the B-phase winding, and the C-phase terminal 133 is connected to the lead wire of the C-phase winding.

In this embodiment, phase B position is shifted 30° mechanical degrees to the right relative to phase A, phase C is 60° mechanical degrees to the right relative to phase A. The distance between the wire leads of the three-phase windings is small, and the performance of the motor can be further optimized, thereby the voltage distribution in the same slot is more uniform, the voltage difference between the conductor sections 124 of adjacent slot layers 112 is reduced, the risk of motor insulation breakdown is reduced, and the reliability of the motor is improved.

When the stator core 110 has 72 slots, each stator slot 111 occupies 5° mechanical degrees in the circumferential direction. Therefore, the lead wire of the A-phase winding and the lead wire of the B-phase winding differ by z/12=6 stator slots 111 in the first circumferential direction D1, and the lead wire of the A-phase winding and the lead wire of the C-phase winding differ by z/6=12 stator slots 111 in the first circumferential direction D1.

Taking the A-phase winding as an example, the winding method for forming the A-phase winding comprises the following steps:
S1: connecting the lead wire of the A-phase winding to a connecting end 122 of a first sub-conductor section located in the initial slot, wherein the first sub-conductor section spans 10 stator slots 111 along the first circumferential direction;
S2: starting from the other connecting end 122 of the first sub-conductor section in the previous step, from the radially outermost slot layer 113 to the radially innermost slot layer 115, along the first circumferential direction D1, connecting to the first-type conductor section arranged in the adjacent slot layers 112 by spanning every 9 stator slots 111, until the radially second innermost slot layer 116 is connected, wherein each first-type conductor section spans 8 stator slots 111 along the first circumferential direction D1;
   The first-type conductor section located in the radially second innermost slot layer 116 is connected to the connecting end 122 of a third-type conductor section located on the radially innermost slot layer 115 after spanning 9 stator slots 111 along the first circumferential direction D1, wherein the third-type conductor section spans 9 stator slots 111 along the first circumferential direction D1;
S3: starting from the other connecting end 122 of the third-type conductor section in the previous step, winding from the radially innermost slot layer 115 to the radially outermost slot layer 113 along the second circumferential direction D2 opposite to the first circumferential direction D1;
   connecting to the first-type conductor section arranged in the adjacent slot layers 112 every 9 stator slots 111 spanned along the second circumferential direction D2, until connecting to the connecting end 122 of the second of the first sub-conductor section located in the radially outermost slot layer 113, wherein each first-type conductor section is arranged along the second circumferential direction D2, and the second of first sub-conductor section is arranged to span 10 stator slots 111 along the first circumferential direction D1;
S4: starting from the other connecting end 122 of the second of the second first sub-conductor section, switching the direction of a spanning (winding direction) of the conductor section 124 to the first circumferential direction D1, until connecting to the second of the third-type conductor section located in the radially innermost slot layer 115;
S5: switching the spanning direction of the conductor section 124 to the second circumferential direction D2, winding from the second of the third-type conductor section to the radially outermost slot layer 113, until connecting to the connecting end 122 of the first of the second sub-conductor section located in the radially outermost slot layer 113, wherein the second sub-conductor section is arranged to span 7 stator slots 111 along the first circumferential direction D1;
S6: repeating the steps S2 to S5 until the connection end 122 of the first-type conductor section is located in the radially second outermost slot layer 117 of the final slot;
S7: connecting the neutral point wire of the A-phase winding to the connecting end 122 of the first-type conductor section located in the radially second outermost slot layer 117 of the final slot, wherein the initial slot is the final slot which spans 9 stator slots 111 in the first circumferential direction D1.

Assuming that the initial slot is the stator slot 111 with the serial number of 1 and the first circumferential direction D1 is the clockwise direction, the stator slot 111 with the serial number of 72 is adjacent to the stator slot 111 with the serial number of 1 in the counterclockwise direction. At this time, the winding of the A-phase winding is as follows:
1f (the connecting end of the lead wire)→11f (first sub-conductor section spanning 10 stator slots 111)→20e→28d→37c→45b→54a→63a→54b→46c→37d→29e→20f→30f (spanning 10 stator slots 111)→39e→47d→56c→64b→1a→10a→1b→65c→56d→48e→39f→ 46f (second sub-conductor section spanning 7 stator slots 111)→55e→63d→72c→8b→17a→26a →17b→9c→72d→64e→55f→65f(spanning 10 stator slots 111)→2e→10d→19c→27b→36a→ 45a→36b→28c→19d→11e→2f→12f (spanning 10 stator slots 111)→21e→29d→38c→46b→ 55a→64a→55b→47c→38d→30e→21f→28f (spanning 7 stator slots 111)→37e→45d→54c→ 62b→71a→8a→71b→63c→54d→46e→37f→47f (spanning 10 stator slots 111)→56e→64d→ 1c→9b→18a→27a→18b→10c→1d→65e→56f→66f (spanning 10 stator slots 111)-3e-11d →20c→28b→37a→46a→37b→29c→20d→12e→3f→10f (spanning 7 stator slots 111)→19e→ 27d→36c→44b→53a→62a→53b→45c→36d→28e→19f→29f(spanning 10 stator slots 111)→ 38e→46d→55c→63b→72a→9a→72b→64c→55d→47e→38f→48f (spanning 10 stator slots 111)→57e→65d→2c→10b→19a→28a→19b→11c→2d→66e→57f→64f (spanning 7 stator slots 111)→1e→9d→18c→26b→35a→44a→35b→27c→18d→10e (the connecting end of the neutral point wire).

Wherein span from slot layer f to slot layer e, slot layer d to slot layer c, and slot layer b to slot layer a are all realized by welding the connecting ends 122 of two conductor sections 124.

The winding path of the B-phase winding and the C-phase winding can be determined in the same way. Finally, the distribution of the three-phase windings in the stator slots 111 is shown in Fig. 2.

The above steps S1 to S7 can also be summarized as follows:
step one: connecting the lead wire to the second-type of conductor section in the initial slot, wherein the second-type conductor section in the initial slot is arranged to span along the first circumferential direction D1;
step two: starting from the second-type of conductor section in the previous step, from the radially outermost slot layer 113 to the radially innermost slot layer 115, along the first circumferential direction D1, connecting to the first-type conductor section arranged in the adjacent slot layers 112 by spanning every y stator slots 111, until the third-type conductor section in the radially innermost slot layer 115 is connected to the first-type conductor section in the radially second innermost slot layer 116 along the first circumferential direction D1 after spanning y stator slots 111, wherein the third-type conductor section is arranged to span along the first circumferential direction D1;
step three: starting from the third-type conductor section in the previous step, from the radial innermost slot layer 115 to the radial outermost slot layer 113 along the second circumferential direction D2 opposite to the first circumferential direction D1, connecting to the first-type conductor section arranged in the adjacent slot layers 112 by spanning every y stator slots 111, until the second of the second-type of conductor section arranged in the radial outermost slot layer 113 in the first circumferential direction D1 is connected, wherein each first-type conductor section is arranged to span along the second circumferential direction D2, and the second of the second-type conductor section is arranged to span along the first circumferential direction D1;
step four: starting from the second of the second-type of conductor section, switching the spanning direction of the conductor section 124 to the first circumferential direction D1;
step five: repeating the steps two to four until the first-type conductor section is located in the radially second outermost slot layer 117 of the final slot;
step six: connecting the neutral point wire to the first-type conductor section in the radially second outermost slot layer 117 of the final slot.

It is to be understood that slot layer a is the radially innermost slot layer 115, slot layer b, c, d, e are the intermediate slot layer 114, and slot layer f is the radially outermost slot layer 113. Slot layer e is the radially second outermost slot layer 117 (belonging to one of the intermediate slot layer 114). Slot b layer is the radially second innermost slot layer 116 (belonging to one of the intermediate slot layer 114).

Referring to FIG. 2, in the circumferential direction, the stator slots 111 comprise a first-type stator slot 118 and a second-type stator slot 119.

The slot layer 112 formed by the conductor section 124 in the first-type stator slot 118 all belong to the same phase. In the embodiment, the conductor section in the six slot layers 112 of the first-type stator slot 118 belong to the same phase of the stator winding (belonging to phase A, phase B, or phase C).

The conductor layer 112 formed by the conductor section 124 in the second-type stator slot 119 belong to two different phases, respectively, and the number of conductor layers 112 of the two different phases in the second-type stator slot 119 is not equal. In the embodiment, the conductor sections 124 in the six slot layers 112 of the second-type stator slot 119 belong to two different phases of the stator windings (respectively belonging to phase A and phase B, phase A and phase C, or phase B and phase C).

Referring to FIG. 2, in the first circumferential direction D1, two of the second-type stator slots 119 are arranged between adjacent first-type stator slots 118.

The number of the conductor layers 112 within the second-type stator slot 119 in the same phase with the first-type stator slot 118 decreases to zero along the first circumferential direction D1 and the second circumferential direction D2, respectively, with the first-type stator slot 118 as a reference.

The slot number per stage per phase q=72/8/3=3, that is, the stator slot 111 per stage per phase includes one first-type stator slot 118 and two of the second-type stator slots 119.

For example, when the conductor layers 112 in one first-type stator slot 118 all belong to phase A, with the first-type stator slot 118 as a reference, the number of conductor layers of phase A in other stator slots 111 in the first circumferential direction D1 and the second circumferential direction D2 successively decreases until zero.

In the present disclosure, adjacent first-type stator slots 118 do not mean that the two first-type stator slots 118 are closely adjacent in the stator core, but mean that there is no other first-type stator slot 118 between the two first-type stator slots 118.

In the embodiment, in the six slot layers of the second-type stator slot 119, the number of conductor sections 124 of the two different phases is not equal (respectively, 2 and 4). In the second-type stator slot 119, the conductor sections 124 belonging to the same phase are continuously distributed in the radial direction.

Therefore, the asymmetric layout design of the stator winding 120 is formed: two of the second-type stator slots 119 are continuous between two adjacent first-type stator slots 118, and in the five continuous stator slots 111, the middle one stator slot 111 has six conductor sections 124 of the same phase, and the two-phase conductors in the four stator slots 111 on the left and right sides are asymmetrically distributed.

In the embodiment, the winding distribution pattern of the phase A in consecutive 5 stator slots 111 is: 2, 4, 6, 4, and 2. Referring to FIG. 2 and Table 1 below, when the slot number of per stage per phase q is 3, the arrangement of the winding of one stage of the stator assembly 100 in each stator slot 111 along the first circumferential direction D1 is BBAAAA (from the slot layer f to the slot layer a), BBBBAA, BBBBBB, CCBBBB, CCCCBB, CCCCCC, AACCCC, AAAACC and AAAAAA. It can be seen that each phase stator winding is centrally symmetrically distributed with respect to the axis of the stator core 110, but is asymmetrically distributed in the radial direction.

**Table 1 Arrangement of the winding of one stage of the stator assembly along the circumferential direction (q=3)**

| second-type stator slot 119 | second-type stator slot 119 | first-type stator slot 118 | second-type stator slot 119 | second-type stator slot 119 | first-type stator slot 118 | second-type stator slot 119 | second-type stator slot 119 | first-type stator slot 118 |
|---|---|---|---|---|---|---|---|---|
| B | B | B | C | C | C | A | A | A |
| B | B | B | C | C | C | A | A | A |
| A | B | B | B | C | C | C | A | A |
| A | B | B | B | C | C | C | A | A |
| A | A | B | B | B | C | C | C | A |
| A | A | B | B | B | C | C | C | A |

Generally, in the process of motor design and manufacture, designers try to avoid the asymmetry of the coil (i.e. the stator winding) and adopt a symmetrical coil arrangement, for example, a distribution pattern of 3, 3, 6, 3, 3, thereby the winding is symmetrically distributed in the radial direction, to ensure the performance and reliability of the motor, and to avoid the occurrence of harmonic current and axial force in the motor due to the asymmetry of the coil, which affects the efficiency and performance of the motor. The short-distance arrangement of the asymmetric coil in the present disclosure attempts from another direction, adopts a technical means abandoned due to technical prejudice, optimizes the design of the stator assembly of the motor, and can achieve better effects of eliminating 5, 7 times harmonics and reducing 6p order vibration noise.

Preferably, since the second-type stator slot 119 has conductor sections 124 of two different phases, the voltage gradient between the conductor sections 124 of different phases is high, and in order to ensure the insulation strength and reliability (between the conductor sections 124 of two different phases), an insulation paper 140 can also be arranged in the second-type stator slot 119 to separate the conductor sections 124 belonging to different phases.

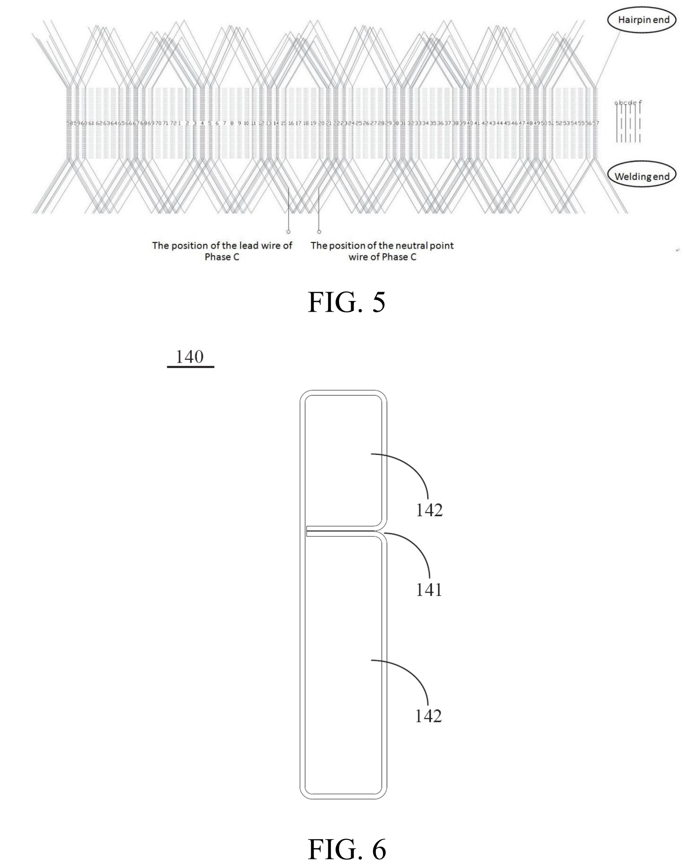

Preferably, in the embodiment, the number of conductor sections 124 of the two phases in the second-type stator slot 119 is 2 and 4 respectively, and the structure of the insulation paper 140 can be designed as a "B" type (as shown in FIG. 6). Specifically, the insulation paper 140 is configured as an integrally formed "B" shaped structural member, which is divided into two mutually separated accommodation spaces 142 by a middle partition portion 141, and the two accommodation spaces 142 are respectively used for accommodating conductor sections 124 of different phases. In the embodiment, the two accommodation spaces 142 are of different sizes. When the stator assembly 100 is assembled, the insulation paper 140 can be previously placed in the corresponding stator slot 111, and then the conductor section 124 are assembled.

In other embodiments of the present disclosure, the stator winding 120 comprises a three-phase winding, and each phase stator winding comprises n branches connected in parallel, wherein n is an integer greater than or equal to 2. That is, each phase stator winding can also be composed of at least two branches.

For example, by arranging the plurality of branches of each phase stator winding in parallel, the magnetic field can be controlled by controlling the current flow direction in each branch, so as to form a more uniform rotating magnetic field, thereby improving the torque stability and operation stability of the motor, reducing the mechanical loss of the motor, and prolonging the service life of the motor.

Specifically, the lead wires of any two adjacent branches of each phase stator winding differ by z/n stator slots 111 in the first circumferential direction D1. This allows the branches of each phase to be evenly distributed in the circumferential direction, thereby improving the stability of the motor. In addition, the initial slot (lead wire) and the final slot (neutral point wire) of each branch are different by z/n-y stator slots 111 in the first circumferential direction D1, which facilitates the connection of the lead wires/neutral point wires of the branches. Accordingly, the number of branches of each phase stator winding can be flexibly set according to actual needs, and the length of each branch can also be determined.

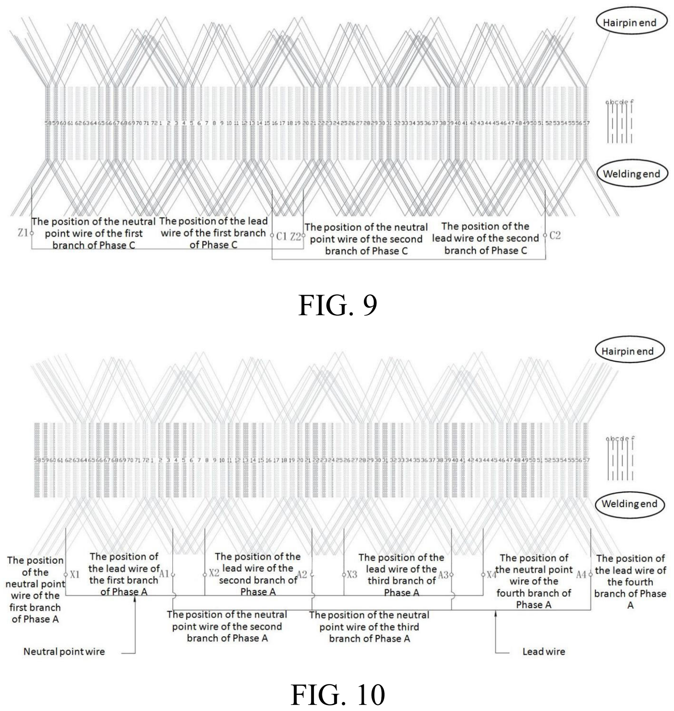

In another embodiment of the present disclosure, each phase stator winding includes four branches in parallel (see FIG. 10 to FIG. 12). The respective lead wires of any two adjacent branches among the four branches differ by z/4 stator slots 111 in the first circumferential direction D1. For example, when the number of the stator slots 111 is 72, the respective lead wires of any two adjacent branches among the four branches differ by 18 stator slots 111 in the first circumferential direction D1. In this way, the four branches of each phase are evenly distributed in the circumferential direction, which can further optimize the motor performance, reduce the risk of motor insulation breakdown, and improve the motor operation reliability.

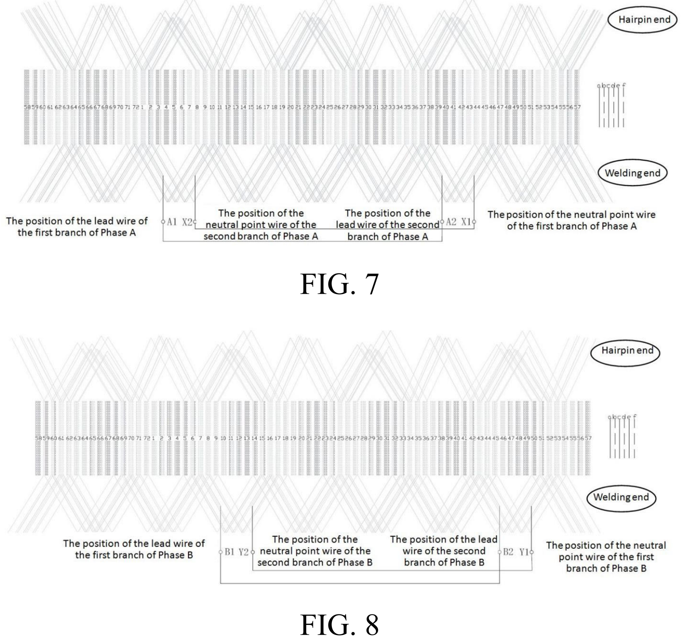

It will be understood that when each phase stator winding includes two branches in parallel, the respective lead wires of the two branches differ by 36 stator slots 111 in the first circumferential direction D1 (see FIG. 7 to FIG. 9). Similarly, the number of branches of each phase stator winding can also be an odd number, for example, each phase stator winding can include three branches in parallel.

Next, referring to FIG. 2, FIG. 10 to FIG. 12, the structure of the stator assembly 100 of another specific embodiment of the present disclosure is described.

Referring to FIG. 2, the stator assembly 100 is for a 72-slot 8-stage 3-phase motor, and y = 72/8 = 9. Each stator slot 111 includes 6 slot layers 112, which are a, b, c, d, e, and f in order from the slot opening to the slot bottom. Each phase stator winding includes four branches in parallel.

The lead wire of one branch of the A-phase winding and the lead wire of the corresponding branch of the B-phase winding differ by z/12 = 6 stator slots 111 in the first circumferential direction D1, and the lead wire of one branch of the A-phase winding and the lead wire of the corresponding branch of the C-phase winding differ by z/6 = 12 stator slots 111 in the first circumferential direction D1.

It will be understood that in this way, the neutral point wires of each branch of each phase stator winding are spaced apart by a smaller distance, and the lead wires of each branch of each phase stator winding are also spaced apart by a smaller distance, which facilitates the interconnection of the neutral point wire (or the lead wire) and facilitates the connection of the neutral point wire (or the lead wire) to the lead wire assembly 130.

The lead wires of the four branches of each phase stator winding are connected to the common end of the corresponding phase, which are the A-phase common end, the B-phase common end and the C-phase common end, respectively. Correspondingly, the A-phase terminal 131 of the lead wire assembly 130 is connected to the A-phase common end, the B-phase terminal 132 is connected to the B-phase common end, and the C-phase terminal 133 is connected to the C-phase common end.

Taking the A-phase winding as an example, assuming that the initial slot of the first branch is the stator slot 111 with the serial number of 1, and the first circumferential direction D1 is the clockwise direction, the stator slot 111 with the serial number of 72 is adjacent to the stator slot 111 with the serial number of 1 in the counterclockwise direction.

At this time, the winding lines of the four branches of the A-phase winding are respectively as follows:
The connection mode of the first branch of the A-phase winding is as follows:
1f (the first branch lead wire connecting end) →11f (spanning 10 stator slots 111) →20e→28d→37c→45b→54a→63a→54b→46c→37d→29e→20f→30f (spanning 10 stator slots 111) →39e→47d→56c→64b→1a→10a→1b→65c→56d→48e→39f→46f (spanning 7 stator slots 111) →55e→63d→72c→8b→17a→26a→17b→9c→72d→64e (the first branch neutral point wire connecting end).

The connection mode of the second branch of the A-phase winding is as follows:
19f (the second branch lead wire connecting end) →29f (spanning 10 stator slots 111) →38e→46d→55c→63b→72a→9a→72b→64c→55d→47e→38f→48f (spanning 10 stator slots 111) →57e→65d→2c→10b→19a→28a→19b→11c→2d→66e→57f→64f (spanning 7 stator slots 111) → le→9d→18c→26b→35a→44a→35b→27c→18d→10e (the second branch neutral point wire connecting end).

The connection mode of the third branch of the A-phase winding is as follows:
37f (the third branch lead wire connecting end) →47f (spanning 10 stator slots 111) →56e→64d→1c→9b→ 18a→27a→18b→10c→1d→65e→56f→66f (spanning 10 stator slots 111) →3e→11d→20c→28b→37a→46a→37b→29c→20d→12e→3f→10f (spanning 7 stator slots 111) →19e→27d→36c→44b→53a→62a→53b→45c→36d→28e (the third branch neutral point wire connecting end).

The connection mode of the fourth branch of the A-phase winding is as follows:
55f (the fourth branch lead wire connecting end) →65f (spanning 10 stator slots 111) →2e→10d→19c→27b→36a→45a→36b→28c→19d→11e→2f→12f (spanning 10 stator slots 111) →21e→29d→38c→46b→55a→64a→55b→47c→38d→30e→21f→28f (spanning 7 stator slots 111) →37e→45d→54c→62b→71a→8a→71b→63c→54d→46e (the fourth branch neutral point wire connecting end).

Correspondingly, the B-phase winding is the A-phase winding right shifted by 6 stator slots 111:
the first branch lead wire of the B-phase winding is 7f, and the first branch neutral point wire of the B-phase winding is 70e;
the second branch lead wire of the B-phase winding is 25f, and the second branch neutral point wire of the B-phase winding is 16e;
the third branch lead wire of the B-phase winding is 43f, and the third branch neutral point wire of the B-phase winding is 34e;
the fourth branch lead wire of the B-phase winding is 61f, and the fourth branch neutral point wire of the B-phase winding is 52e.

The winding of the C-phase winding is the A-phase winding right shifted by 12 stator slots 111:
the first branch lead wire of the C-phase winding is 13f, and the first branch neutral point wire of the C-phase winding is 4e;
the second branch lead wire of the C-phase winding is 31f, and the second branch neutral point wire of the C-phase winding is 22e;
the third branch lead wire of the C-phase winding is 49f, and the third branch neutral point wire of the C-phase winding is 40e; and
the fourth branch lead wire of the C-phase winding is 67f, and the fourth branch neutral point wire of the C-phase winding is 58e.

The distribution of the 72-slot 8-stage3-phase winding obtained by the above winding method in the stator core 110 is shown in Fig. 2.

It will be understood that in the above embodiments, only the 72-slot 8-stage 3-phase motor is taken as an example, and those skilled in the art can apply the winding method of each phase in the above embodiments to a 90-slot 10-stage 3-phase motor and a 54-slot 6-stage 3-phase motor. According to the arrangement form (short-distance asymmetry) of the windings of each phase in the above embodiments, other arrangement forms of the same or similar principles can also be designed correspondingly, for example, the number of slots per stage per phase is modified. Details are not described herein.

The third aspect of the present disclosure provides a motor. The motor according to the embodiment of the present disclosure comprises the stator assembly 100 according to the embodiment of the present disclosure. The structure and operation of other components, such as a rotor, of the motor according to the embodiment of present disclosure are well known to those skilled in the art, and are not described herein. The motor according to the embodiment of the present disclosure improves the overall performance of the motor by arranging the stator assembly 100 according to the embodiment of the present disclosure.

The fourth aspect of the present disclosure provides a vehicle comprising the motor according to the third aspect of the present disclosure. The motor according to the embodiment of the present disclosure improves the overall performance of the vehicle.

Unless otherwise defined, technical and scientific terms used herein have the same meaning as commonly understood by one of ordinary skill in the art to which the present disclosure belongs. The terminology used in the description herein is for the purpose of describing particular embodiments only and is not intended to be limiting of the present disclosure. Terms such as "disposed" and like appearing herein may mean both that one component is directly attached to another component and that one component is attached to other component through intermediary components. Features described herein in one embodiment may be applied to another embodiment alone or in combination with other features unless that feature is not applicable in that other embodiment or stated otherwise.

The present disclosure has been described in the above embodiments, but it will be understood that the above embodiments are only for the purpose of example and illustration, and are not intended to limit the present disclosure to the described embodiments. Those skilled in the art can understand that more kinds of variations and modifications can also be made according to the teachings of the present disclosure, and these variations and modifications all fall within the scope of the present disclosure claimed.

## Claims

1. A stator assembly (100) being applicable to a z-slot 2p-stage m-phase motor, the stator assembly (100) comprising:
a stator core (110) having z stator slots (111) spaced apart along a circumferential direction of stator core (110), each stator slot having a plurality of slot layers (112) arranged in a radial direction; and
a stator winding (120) comprising a plurality of conductor sections (124), the plurality of conductor sections (124) comprising:
a first-type conductor section, two in-slot portions (123) of each of the first-type conductor section being located in adjacent slot layers (112) respectively and having a span of y-1 stator slots (111),
the two in-slot portions (123) of each of the first-type conductor section being in an intermediate slot layer (114) between a radially outermost slot layer (113) and a radially innermost slot layer (115), y is an integer and y = z/2p.

2. The stator assembly (100) according to claim 1, wherein the plurality of conductor sections (124) further comprises:
a second-type conductor section, the two in-slot portions (123) of the second-type conductor section being in the radially outermost slot layer (113), a first connecting end of the second-type conductor section being connected to a second connecting end of one of the first-type conductor section, and a second connecting end of the second-type conductor section being connected to a first connecting end of another one of the first-type conductor section.

3. The stator assembly (100) according to claim 2, wherein the plurality of conductor sections (124) further comprises:
a third-type of conductor section, the two in-slot portions (123) of the third-type of conductor section being in the radially innermost slot layer (115) and having a span of y stator slots (111),
a first connection end of the third-type of conductor section being connected to a second connection end of one of the first-type of conductor section, and a second connection end of the third-type of conductor section being connected to a first connection end of another of the first-type of conductor section.

4. The stator assembly (100) according to claim 3, wherein each phase stator winding comprises a plurality of the first-type of conductor sections, the second-type of conductor sections and the third-type of conductor sections;
the plurality of conductor sections (124) of each phase stator winding are structured within the stator core (110) as:
two adjacent conductor sections (124) being located in different slot layers (112) and differing by y stator slots (111) in the circumferential direction,
the conductor section (124) being arranged starting from the radially outermost slot layer (113) of an initial slot to the radially second innermost slot layer (116) of a final slot, the kM+1th conductor section (124) to the (k+1/2)M+1th conductor section (124) being arranged to span along a first circumferential direction,
the (k+1/2)M+2th conductor section (124) to the (k+1)Mth conductor section (124) being arranged to span along a second circumferential direction opposite to the first circumferential direction,
the (k+1/2)M+2th conductor section (124) and the (k+1/2)M+1th conductor section (124) differing by y stator slots (111) in the second circumferential direction, the (k+1)M+1th conductor section (124) and the (k+1)Mth conductor section (124) differing by y stator slots (111) in the second circumferential direction,
M is the number of the slot layers (112) of the stator slots (111), k≥0, and k is an integer.

5. The stator assembly (100) according to claim4, wherein the second-type of conductor section comprises a first sub-conductor section spanning y+1 stator slots (111) and a second sub-conductor section spanning y-2 stator slots (111).

6. The stator assembly (100) according to claim 5, wherein two of the first sub-conductor sections are arranged between two adjacent ones of the second sub-conductor sections.

7. The stator assembly (100) according to any one of claims 1 to 6, wherein a number of slots per stage per phase is q = z/(2p)/m = 3.

8. The stator assembly (100) according to any one of claims 1 to 7, wherein the number of stator slots (111) is 54, 72 or 90; and/or
the number of slot layers of each stator slot (111) is 6, 8 or 10.

9. The stator assembly (100) according to any one of claims 1 to 8, wherein a cross-sectional shape of the conductor section (124) in a direction perpendicular to an extension direction of the conductor section (124) is rectangular.

10. The stator assembly (100) according to any one of claims 1 to 9, wherein the stator winding (120) comprises a three-phase winding, each phase stator winding comprises one coil, a lead wire and a neutral point wire of each phase stator winding differing by y stator slots (111) in the circumferential direction.

11. The stator assembly (100) according to claim 10,wherein the stator winding (120) comprises a three-phase winding, respectively an A-phase winding, a B-phase winding and a C-phase winding, a lead wire of the A-phase winding and a lead wire of the B-phase winding differing by z/12 stator slots (111) in the circumferential direction, and wherein the lead wire of the A-phase winding and a lead wire of the C-phase winding differ by z/6 stator slots (111) in the circumferential direction.

12. The stator assembly (100) according to any one of claims 1 to 9,wherein the stator winding (120) comprises a three-phase winding, each phase stator winding comprises n branches connected in parallel, wherein n is an integer greater than or equal to 2;
the respective lead wires of any two adjacent branches of each phase stator winding differing by z/n stator slots (111) in the circumferential direction;
the lead wire and the neutral point wire of each branch differing by z/n-y stator slots (111) in the circumferential direction.

13. The stator assembly (100) according to claim 12,wherein each phase stator winding comprises four branches connected in parallel, and the respective lead wires of two adjacent branches of the four branches differing by z/4 stator slots (111) in the circumferential direction.

14. The stator assembly (100) according to claim12, wherein the stator winding (120) comprises a three-phase winding, respectively an A-phase winding, a B-phase winding and a C-phase winding, the lead wire of one branch of the A-phase winding and the lead wire of the corresponding branch of the B-phase winding differing by z/12 stator slots (111) in the circumferential direction, and the lead wire of the branch of the A-phase winding and the lead wire of the corresponding branch of the C-phase winding differing by z/6 stator slots (111) in the circumferential direction.

15. The stator assembly (100) according to any one of claims 1 to 9, wherein the stator slots (111) comprise a first-type stator slot (118) and a second-type stator slot (119),
the conductor section (124) arranged in the first-type stator slot (118) belonging to the windings of the same phase, and the conductor section (124) arranged in the second-type stator slot (119) belonging to the windings of two different phases, respectively;
the number of conductor sections (124) belonging to the windings of the two different phases in the second-type stator slot (119) being unequal.

16. A method for winding a winding of a stator assembly (100), the stator assembly (100) being applicable to a z-slot 2p-stage m-phase motor, the stator assembly (100) comprising:
a stator core (110) having z stator slots (111) spaced apart along a circumferential direction of stator core (110), each stator slot having a plurality of slot layers (112) arranged in a radial direction; and
a stator winding (120) comprising a plurality of conductor sections (124), the plurality of conductor sections (124) comprising:
a first-type conductor section, two in-slot portions (123) of each of the first-type conductor section being located in adjacent slot layers (112) respectively and having a span of y-1 stator slots (111),
the two in-slot portions (123) of each of the first-type conductor section being in an intermediate slot layer (114) between a radially outermost slot layer (113) and a radially innermost slot layer (115), y is an integer and y = z/2p;
the method of winding each phase stator winding comprising: connecting the first-type conductor section as a part of the stator winding (120).

17. A method for winding a winding of a stator assembly (100) according to claim 16, wherein the plurality of conductor sections (124) of the stator winding (120) further comprises:
a second-type conductor section, the two in-slot portions (123) of the second-type conductor section being in the radially outermost slot layer (113), a first connecting end of the second-type conductor section being connected to a second connecting end of one of the first-type conductor section, and a second connecting end of the second-type conductor section being connected to a first connecting end of another one of the first-type conductor section; and
a third-type of conductor section, the two in-slot portions (123) of the third-type of conductor section being in the radially innermost slot layer (115) and having a span of y stator slots (111), a first connection end of the third-type of conductor section being connected to a second connection end of one of the first-type of conductor section, and a second connection end of the third-type of conductor section being connected to a first connection end of another of the first-type of conductor section;
the method of winding each phase stator winding comprising the following steps:
step one: connecting a lead wire to the second-type conductor section in an initial slot, the second-type conductor section in the initial slot being arranged to span along a first circumferential direction;
step two: starting from the second-type conductor section in the previous step, from the radially outermost slot layer (113) to the radially innermost slot layer (115), along the first circumferential direction, connecting to the first-type conductor section arranged in the adjacent slot layers (112) by spanning every y stator slots (111), until the first-type conductor section in a radially second innermost slot layer (116) is connected to the third-type conductor section in the radially innermost slot layer (115) after spanning y stator slots (111) along the first circumferential direction, wherein the third-type conductor section is arranged to span along the first circumferential direction;
step three: starting from the third-type conductor section in the previous step, from the radially innermost slot layer (115) to the radially outermost slot layer (113), along a second circumferential direction opposite to the first circumferential direction, connecting to the first-type conductor section arranged in the adjacent slot layers (112) by spanning every y stator slots (111), until connecting to the second-type conductor section arranged in the first circumferential direction in the radially outermost slot layer (113), wherein each first-type conductor section is arranged to span along the second circumferential direction and the second-type conductor section is arranged to span along the first circumferential direction;
step four: starting from a second of the second-type conductor section, switching the direction of a spanning arrangement of the conductor section (124) to the first circumferential direction;
step five: repeating steps S2 to S4 until the first-type conductor section is located in the radially second outermost slot layer (117) of the final slot;
step six: connecting a neutral point wire to the first-type conductor section located in the radially second outermost slot layer (117) of the final slot.

18. A motor, comprising a rotor and a stator assembly (100) according to any one of claims 1 to 15, a method for winding a winding of a stator assembly(100) according to claim 16 or 17.

19. A vehicle, comprising an electric machine according to claim 18.
